## Europäisches Patentamt

## European Patent Office

## Office européen des brevets

(19)

(11) Publication number: **0 205 194**
**B1**

(12) EUROPEAN PATENT SPECIFICATION

(45) Date of publication of patent specification: 15.03.89

(21) Application number: 86108862.3

(22) Date of filing: 06.04.84

(60) Publication number of the earlier application in accordance with Art. 76 EPC: 0 139 000

(51) Int. Cl.⁴: **F 01 K 23/10**, F 22 B 1/18, F 22 B 33/16

(54) Combined cycle power plant.

(30) Priority: 08.04.83 US 483437

(43) Date of publication of application:
17.12.86 Bulletin 86/51

(45) Publication of the grant of the patent:
15.03.89 Bulletin 89/11

(84) Designated Contracting States:
CH DE FR GB LI SE

(56) References cited:
WO-A-83/00371
BE-A- 522 339
CH-A- 621 186
DE-B-1 811 596
FR-A- 965 429
GB-A- 691 175
GB-A-2 095 761
US-A-3 084 742

CIMAC, 1968, pages 1-28, CIMAC Permanent
Committee, Brussels, BE; J.L. MANGAN et al.:
"Development of a highly efficient gas turbine-
steam turbine generating plant"

(73) Proprietor: SOLAR TURBINES INCORPORATED
2200 Pacific Highway P.O. Box 80966
San Diego California 92138 (US)

(72) Inventor: Duffy, Thomas E.
2226 Illion Street
San Diego California 92110 (US)
Inventor: Archibald, John P.
5554 Candlelight Drive
La Jolla California 92037 (US)
Inventor: Campbell, Alan H.
625 Cerro Street
Encinitas California 92024 (US)

(74) Representative: Jackson, Peter Arthur et al
GILL JENNINGS & EVERY 53-64 Chancery Lane
London WC2A 1HN (GB)

Courier Press, Leamington Spa, England.

# Description

The present invention relates to power plants including steam generators (or boilers) of the once-through type.

A number of once-through boilers have heretofore been designed as shown by U.S. Patents Nos. US—A—1,905,142; US—A—3,173,405 and US—A—3,357,411. US—A—3,144,856 describes a steam generating plant in which steam is produced at more than one level. Otherwise, the patented and herein disclosed steam generators are quite different. However, once-through boilers have heretofore typically been designed along the same lines as conventional boilers.

Conventional steam boilers have a number of economic shortcomings and cause many operating problems in combined cycle applications, particularly those of small capacity using gas turbines in the 4000—25000 Kw range.

Start-up and shut down procedures are complex. Attended operation is mandatory, and as many as seven hours may be needed to carry out the procedure.

Heat recovery is low because conventional boilers only produce steam at a single pressure. Consequently, even at high expense, only a moderate improvement in station heat rate may be obtained.

Tube, valve steam, joint and other leaks are common in conventional boilers. These are difficult and time consuming — and consequently expensive — to repair or plug. Excessive feedwater consumption and maintenance costs and deterioration in performance result.

Conventional boilers are also subject to freezing and related damage during installation and checkout.

According to the present invention, a combined cycle power plant comprising a gas turbine engine; a once-through boiler having a casing; a gas inlet and a gas outlet at the lower and upper ends of the casing, respectively; means for effecting a flow of feedwater into the boiler; means for effecting a flow of exhaust gases from the gas turbine engine through the boiler to convert the feedwater to steam; and a steam turbine connected to the boiler so as to receive a flow of the steam generated in the boiler to drive the turbine; the boiler having hydraulically independent high and low pressure steam generating means, connected to high and low pressure sections, respectively, of the steam turbine; (as disclosed for example in GB—A—691175) is characterised in that the boiler has a plurality of independent, steam generating circuits each comprising a single, sinuous low pressure tube with horizontal tube runs and a high pressure tube internested with the low pressure tube.

The present invention thus uses a novel boiler capable of dual pressure steam generation; i.e., of raising steam at two different pressure levels in what amounts to two hydraulically independent boilers sharing a common gas path. As a result, they may be 21—25 percent more efficient in recovering heat than a conventional boiler in a typical combined cycle power plant. The boiler has a once-through configuration in which the transition from water to superheated steam takes place in continuous tubes or circuits, each having a high and a low pressure section. All components of the boilers contacted by water or steam are preferably fabricated of a stainless steel or other corrosion resistant material. This eliminates the complex chemical treatment required in a conventional boiler to control pH and dissolved oxygen in the feedwater, reducing maintenance and operating costs and further tending to make automated operation feasible.

In the accompanying drawings:—

Figure 1 is a schematic view of a combined cycle power plant which includes a once-through boiler constructed in accord with and embodying the principles of the present invention;

Figure 2 is a front elevation of the boiler with part of the boiler casing broken away to show its internal components;

Figure 3 is a generally diagrammatic view of the internal components of the boiler;

Figure 4A is a left-hand end view of one of a number of essentially identical circuit assemblies in which steam is generated in the boiler;

Figure 4B is a side view of an end support strap incorporated in the circuit assembly;

Figure 5A is a side elevation of a center support strap incorporated in each of the circuit assemblies;

Figure 5B is an end elevation of the center strap; and

Figure 6 is a partially sectioned view of the structure at the inlet end of a circuit assembly tube.

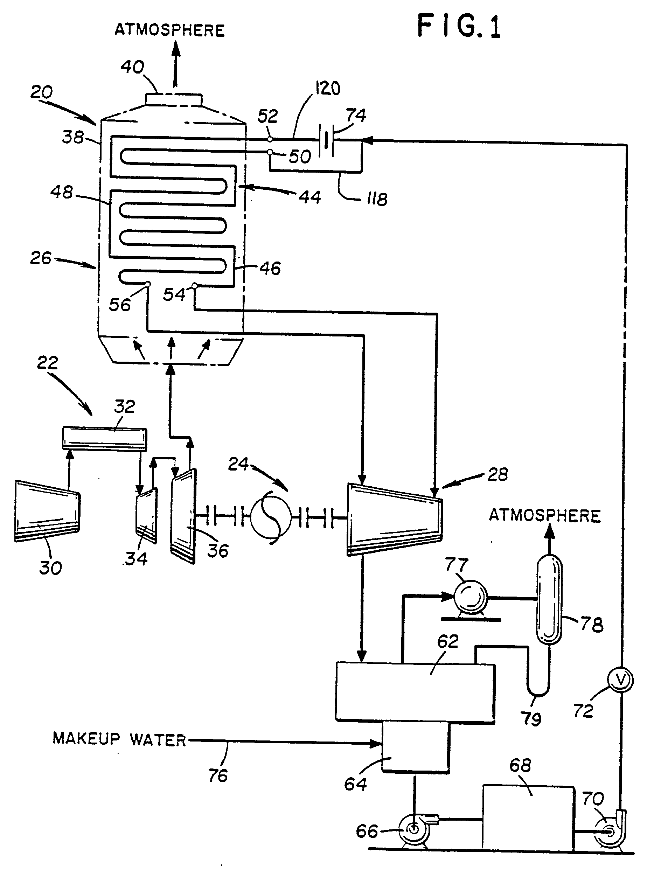

Referring now to the drawing, Figure 1 depicts a combined cycle power plant 20 constructed in accord with and embodying the principles of the present invention. For the most part, the components of this system are of conventional or otherwise familiar construction. Those components will be described herein only to the extent necessary for an understanding of the present invention.

The major components of power plant 20 include a gas turbine engine 22 drive connected to an alternator 24, a once-through boiler 26 in which steam is generated by thermal energy recovered from the hot gases exhausted from gas turbine engine 22, and a steam turbine 28 also drive connected to alternator 24 and employing the steam in boiler 26 as a motive fluid.

In power plant 20, steam turbine 28 also drives the exemplary load, alternator 24. However, it can equally well be employed to drive a load which is different from the load being driven by gas turbine engine 22.

The illustrated gas turbine engine is conventional configuration; it includes a compressor 30, a combustor 32, a gas producer turbine 34 for driving compressor 30, and a power turbine 36 which drives alternator 24. Hot gases exhausted from power turbine 36, typically at a temperature in the range of 427—428°C, are ducted to, and flow upwardly through, the casing 38 of steam generator 26. Typically, these gases will be exhausted to atmosphere through stack 40 at a temperature on the order of 112°C. The heat thus recovered is typically 21—25% higher than can be recovered in the unfired boilers heretofore employed in combined cycle power plants.

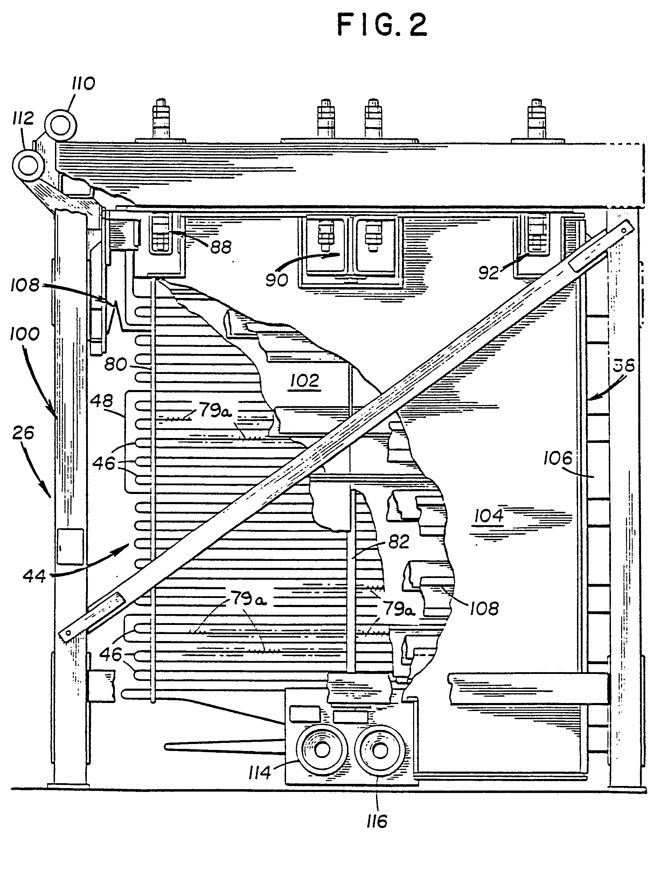

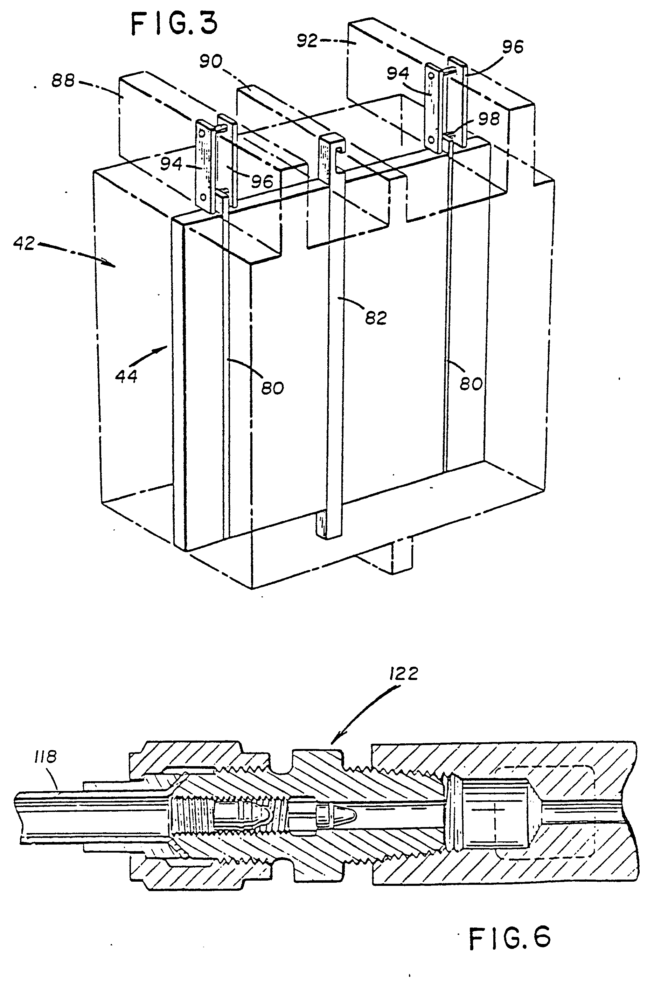

The boiler 26 illustrated in Figure 1 has a once-through, dual pressure configuration. It includes a steam generating module 42 (See Figures 2 and 3). In one actual boiler design this module is made of forty steam generating circuit assemblies each including a high pressure tube 46 and a low pressure tube 48. In each of these tubes a phase change of water to saturated steam and from saturated steam to superheated steam occurs in a continuous flow path extending from the inlet 50 (or 52) to the outlet 54 (or 56) of the tube as the water flows downwardly through the tube in efficient, counterflow relationship to the flow of the hot gas turbine engine exhaust gases. Thus, different regions in each tube function as a feedwater heater, as a vaporizer, and as a superheater.

High pressure steam generated in tubes 46 of boiler 26 flows into the high pressure section of dual pressure steam turbine engine 28, and low pressure steam generated in the boiler flows into the low pressure section of the turbine.

Steam exhausted from turbine 28 flows into a conventional water cooled surface condenser 62 where the steam is condensed (other types of condensers such as those using air as the cooling medium can be used instead, if desired). Condensate accumulates in hot well 64 which contains the inventory of feedwater needed for boiler 26. That the feedwater inventory can be contained in this relatively small capacity system component is important because the large mass of saturated water contained in the drums of a conventional boiler, and eliminated in the novel boilers disclosed herein, is a safety hazard and has produced widespread legislation requiring attended boiler operation. This is cost effective and, also, permits remote, unattended operation of combined cycle power plant 20.

From hot well 64, the condensed steam is circulated by condensate pump 66 to a condensate polisher 68. Here, dissolved solids are removed. The condensate is then pumped to steam generator 26 by feedwater pump 70 through a flow control valve 72. This valve matches the feedwater flow rate to the enthalpy in the hot gases supplied to the steam generator from gas turbine engine 22. A fixed orifice 74 on the upstream side of the inlets 50 and 52 to steam generating tubes 46 and 48 splits the feedwater in proper proportions between the high pressure tubes 46 and the low pressure tubes 48.

As indicated above, it has unexpectedly been found that the fabrication of those boiler components wetted by aqueous fluids from corrosion resistant material eliminates the need for chemically removing dissolved oxygen from the feedwater supplied to boiler 26 or for controlling the pH of the feedwater. Instead, physical removal of dissolved oxygen by hot well deaeration has been found adequate to prevent corrosion of the boiler components even without pH control.

Hot well deaeration is effected by a vacuum pump connected to hot well 64 through condenser 62. Oxygen evacuated from the hot well condenser by the vacuum pump typically contains appreciable amounts of entrained water. Consequently, the evacuated air is pumped into a conventional separator 78. Air is discharged from separator 78 to atmosphere, and water is returned through a trap 79 from separator 78 to condenser 62.

One of the important advantages of the steam generators disclosed herein and discussed above is that the requirement for make-up of feedwater is nominal. For example, one boiler of the type disclosed herein is planned to produce 6998 kilograms of steam per hour at one exemplary design point. Make-up water requirements for this boiler are less than 2.4 liters per hour. In contrast, make-up water requirements for a conventional blowdown boiler of comparable capacity are about 170 liter per hour.

Such make-up water as is required is first demineralized and then supplied to hot well 64 through make-up water line 86.

Referring now more specifically to Figures 2 and 3, each of the forty separate circuit assemblies 44 making up the steam generating module 42 of boiler 26 has a serpentine high pressure tube 46 with twenty-nine horizontal tube runs connected by U-shaped end bends and, internested therewith, a serpentine low pressure tube 48 with sixteen tube runs also connected by U-shaped end bends. In this exemplary boiler, the external tube diameter is 158.75 mm in the low pressure tubes 48 and in the feedwater sections of the high pressure tubes 46, and the wall thickness is 14.73 mm. The external tube diameter is increased to 190.5 mm in the vaporizer and superheater sections of the high pressure tubes 46 to reduce the pressure drop in those tubes.

The tube runs are staggered, as can be seen in Figure 4A, and spaced on about 508 mm centers. Although not critical, the staggered tube run configuration is preferred as this provides maximum heat transfer area per unit volume of steam generating boiler module 42. Specifically, in a typical boiler, four rows of staggered run tubes will provide approximately the same transfer of heat from the hot gases to the feedwater as seven rows of parallel tubes will.

Solid helical fins (shown diagrammatically in Figure 2 and identified by reference character 79a) surround both the high and low pressure tubes 46 and 48. In the exemplary boiler under discussion, fins 6.35 mm thick and 95.25 mm tall are employed. These fins are spaced apart about 36.29 mm on the 158.75 mm outer diameter tubes and about 28.22 mm on the 190.5 mm outer diameter tubes. The use of finned tubing is another important practical feature of the present invention as a finned tube can provide up to ten times the heat transfer surface area of a bare tube.

As indicated above, a number of desirable attributes of those boilers disclosed herein such as reduced maintenance and operating costs, simplication of automatic operation, and elimination of possibilities for operator error are obtained by the use of corrosion resistant materials, thereby eliminating the need for controlling the pH of the boiler feedwater or for chemically controlling its dissolved oxygen content. To this end, tubes 46 and 48 are made of such a material, typically a nickel-chromium-iron containing, high temperature and corrosion resistant alloy.

The other boiler components in the water-steam circuit are also fabricated of corrosion resistant materials such as those just discussed or of Type 316 or 321 stainless steels as a further example.

Another advantage of fabricating the tubes 46 and 48 and other water or steam wetted boiler components from materials such as those just described is that the boiler can be operated dry for extended periods of time. As indicated above, this mode of operation can be employed to rid the boiler tube and other surfaces contacted by hot gases of soot or other gas side fouling.

Still another advantage of using corrosion resistant materials for the purpose just described is that they make the boiler capable of withstanding corrosion in marine environments, making it eminently suitable for offshore platform and similar applications.

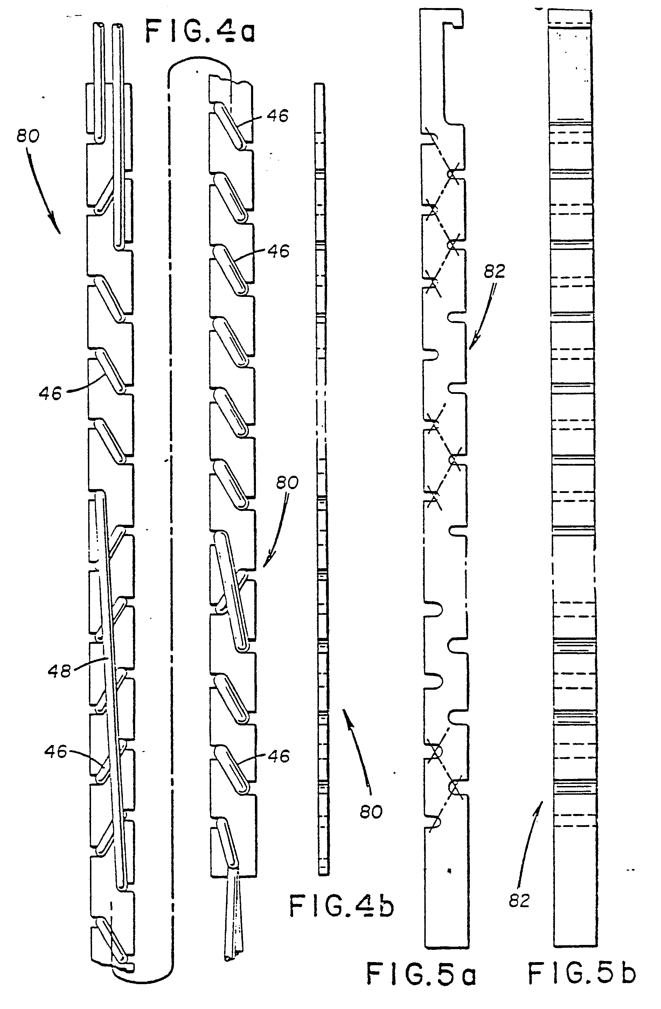

Referring again to the drawing, the horizontal runs of the high pressure tube 46 and of the low pressure tube 48 in each of the circuit assemblies 44 are fixed to vertical end straps 80 and a vertical center strap 82 (see Figures 4A, 4B, 5A and 5B).

The end straps are configured to accept shouldered sleeves which are brazed to the tubes at the ends of the finned areas. With the forty circuit assemblies 44 disposed in the side-by-side arrangement shown in Figure 3, the end straps 80 combined to form two side walls defining the flow path of the hot gases through boiler 26.

The center strap 82 of each circuit assembly 44 is notched to accept sleeves 86 which are brazed onto the fins at the midspan of each tube run. This arrangement is significant as it permits continuous finning of the tube runs. The center straps are positioned by alternating flares on sleeves 86 (not shown) on opposite sides of the strap. ·

Referring now to Figures 2 and 3, the circuit assemblies 44 made up of high and low pressure steam generating tubes 46 and 48 and the corresponding independent set of end and center straps or hangers 80 and 82 are suspended from horizontal supports 88, 90 and 92 which cross the gas path through boiler 26. In particular, end hangers 80 are suspended from beams 88 and 92 by support straps 94 and 96. The upper ends of straps 94 and 96 are pinned to the associated hanger 80 by fasteners 98. The upper ends of center hangers 82 are configured to engage a ledge (not shown) running along center support beam 90.

This hanger and strap arrangement by which the tubes of the various circuit assemblies 44 are suspended· is important because it provides a high degree of thermal compliance. This furthers the capabilities of boiler 26 to be operated dry for the removal of gas side fouling without causing structural damage to the boiler.

Beams 88, 90 and 92 are supported from a cold frame 100 of post-and-beam construction. The details of this frame are not part of the present invention; and they will, consequently, not be described herein.

The cold frame also supports a front liner 102 and a rear liner (not shown). These two liners cooperate with the assembled end straps 80 of the circuit assemblies 44 to define the gas path through boiler 26.

Also supported from cold frame 100 is an outer casing composed of a front panel 104, two side panels 106 (only one of which is shown), and a rear panel (not shown). The panels are separated from the assembled end straps 80 and the front and rear inner liners by spacers 108.

This is an important safety feature. Any steam that escapes through a leak of rupture will be ducted upwardly through the boiler and out stack 40 and will consequently not endanger personnel in the area of the boiler.

Cold frame 100 also supports feedwater inlet headers 110 and 112. As shown in Figure 2, the steam outlet headers 114 and 116 are enclosed within and supported by the outer casing of boiler 26 so that they can drop downwards as the boiler temperature increases. This, too, ensures that escaping steam will be safely vented from the boiler rather than endangering personnel in the vicinity.

Referring now to Figures 1, 2 and 6, feedwater is supplied to each of the high and low pressure steam generating tubes 46 and 48 from inlet headers 110 and 112 through a tube 118. A filter and orifice assembly 122 is installed in each feedwater supply tube. Typically, the orifice will be sized to create a substantial pressure drop across the tube 46 or 48 with which the orifice assembly is associated. This ensures boiling stability in the steam generating tubes and equal flow distribution of the feedwater among the paralleled high pressure tubes and the paralleled low pressure tubes.

**Claims**

1. A combined cycle power plant comprising a gas turbine engine (22); a once-through boiler (26) having a casing (38); a gas inlet and a gas outlet (40) at the lower and upper ends of the casing (38), respectively; means (70, 72) for effecting a flow of feedwater into the boiler; means (80, 102) for effecting a flow of exhaust gases from the gas turbine engine (22) through the boiler (26) to convert the feedwater to steam; and a steam turbine (28) connected to the boiler so as to receive a flow of the steam generated in the boiler to drive the turbine; the boiler (26) having hydraulically independent high and low pressure steam generating means (46, 50, 54), (48, 52, 56) connected to high and low pressure sections, respectively, of the steam turbine; characterised in that the boiler (26) has a plurality of independent, steam generating circuits (44) each comprising a single, sinuous low pressure tube with horizontal tube runs and a high pressure tube (46) internested with the low pressure tube (48).

2. A power plant according to claim 1, which has a single feedwater pump (70) for supplying feedwater to both the high pressure steam generating means (46, 50, 54) and the low pressure steam generating means (48, 52, 56) of the boiler (26).

3. A power plant according to claim 1 or claim 2, which has condenser means (62) for condensing steam exhausted from the steam turbine (28) and a hot well (64) for receiving the condensate, the hot well (64) containing the feedwater inventory of the power plant (20).

4. A power plant according to any one of the preceding claims, wherein all components of the boiler (26) contactable by aqueous fluid are fabricated from corrosion resistant materials.

5. A power plant according to any one of the preceding claims, which includes outlet headers (114, 116) for receiving the steam generated in the high and low pressure tubes (46, 48), the outlet headers (114, 116) being enclosed in the boiler casing (38) whereby steam generated in the boiler (26) and escaping by leakage or rupture will be safely ducted from the casing.

6. A power plant according to claim 5, which has first and second inlet headers (110, 112) with which the inlets (50, 52) of the high and low pressure tubes (46, 48), respectively, communicate and orifice means (74) in flow circuit relationship between the pump (70) and the headers (110, 112) for splitting the flow of feedwater therebetween.

7. A power plant according to any one of the preceding claims, wherein there is an orifice means (122) at the inlet end (52, 50) of the high and low pressure tubes (46, 48) in the boiler (26) for creating a pressure drop at the inlet thereof which is sufficiently higher than the pressure drop across the remainder of the tube (46, 48) to reduce flow instability in the tube.

8. A power plant according to any one of the preceding claims, wherein the high and low pressure tubes (46, 48) are equipped with solid, helical, external fins (78).

**Patentansprüche**

1. Kraftanlage mit kombiniertem Kreislauf, wobei folgendes vorgesehen ist: eine Gasturbinenmaschine (22); eine Eindurchgangssiedevorrichtung (26), mit einem Gehäuse (38); einem Gaseinlaß und einem Gasauslaß (40) an den unteren bzw. oberen Enden des Gehäuses (38); Mittel (70, 72) zur Bewirkung einer Strömung von Speisewasser in die Siedevorrichtung; Mittel (80, 102) zur Bewirkung einer Strömung von Abgasen von der Gasturbinenmaschine (22) durch die Siedevorrichtung (26), um das Speisewasser in Dampf umzuwandeln; und eine Dampfturbine (28) verbunden mit der Siedevorrichtung, um so einen Fluß an Dampf erzeugt in der Siedevorrichtung zum Antrieb der Turbine zu empfangen; wobei die Siedevorrichtung (26) hydraulisch unabhängige Hoch- und Niederdruckdampferzeugungsmittel (46, 50, 54), (48, 52, 56) aufweist, und zwar verbunden mit Hoch- bzw. Niederdruckabschnitten der Dampfturbine, dadurch gekennzeichnet, daß die Siedevorrichtung (26) eine Vielzahl von unabhängigen Dampferzeugungskreisen (44) aufweist, deren jeder ein einziges sinusförmiges Niederdruckrohr umfaßt mit horizontalen Rohrläufen und einem Hochdruckrohr (46) ineinandersitzend mit dem Niederdruckrohr (48).

2. Kraftanlage nach Anspruch 1 mit einer einzigen Speisewasserpumpe (70) zur Lieferung von Speisewasser an sowohl die Hochdruckdampferzeugungsmittel (46, 50, 54) als auch die Niederdruckdampferzeugungsmittel (48, 52, 56) der Siedevorrichtung (26).

3. Kraftanlage nach Anspruch 1 oder 2 mit Kondensatormitteln (62) zum Kondensieren des von der Dampfturbine (28) ausgestoßenen Dampfes und einen Heißwasserspeicher (64) zum Empfang des Kondensats, wobei der Heißwasserspeicher (64) den Speisewasservorrat für die Kraftanlage (20) enthält.

4. Kraftanlage nach einem der vorhergehenden Ansprüche, wobei sämtliche Komponenten der Siedevorrichtung (26) die von wässrigem Strömungsmittel kontaktierbar sind aus korrosionsbeständigen Materialien hergestellt sind.

5. Kraftanlage nach einem der vorhergehenden Ansprüche mit Auslaßsammlern (114, 116) zur Aufnahme des in den Hoch- und Niederdruckrohren (46, 48) erzeugten Dampfes, wobei die Auslaßsammler (114, 116) in dem Siedevorrichtungsgehäuse (38) umschlossen sind, wodurch in der Siedevorrichtung (26) erzeugter Dampf der durch Leck oder Bruch entweicht sicher vom Gehäuse weggeführt wird.

6. Kraftanlage nach Anspruch 5 mit ersten und zweiten Einlaßsammlern (110, 112), mit denen die Einlässe (50, 52) der Hoch- bzw. Niederdruckrohre (46, 48) in Verbindung stehen, und Zumeßöffnungsmittel (74) in Strömungskreisbeziehung zwischen der Pumpe (70) und den Sammlern (110, 112) zum Aufspalten des Speisewasserflusses dazwischen.

7. Kraftanlage nach einem der vorhergehenden Ansprüche, wobei Zumeßöffnungsmittel (122) am Einlaßende (52, 50) der Hoch- und Niederdruckrohre (46, 48) in der Siedevorrichtung (26) vorgesehen sind, um einen Druckabfall am Einlaß davon vorzusehen, der hinreichend höher ist als der Druckabfall am Rest des Rohrs (46, 48), um die Strömungsinstabilität im Rohr zu reduzieren.

8. Kraftanlage nach einem der vorhergehenden Ansprüche, wobei die Hoch- und Niederdruckrohre (46, 48) mit massiven schraubenlinienförmigen externen Flossen (78) ausgestattet sind.

**Revendications**

1. Centrale de production d'énergie à cycle combiné comprenant un moteur à turbine à gaz (22); une chaudière à passage forcée unique (26) possédant un carter (38); une entrée des gaz et une sortie (40) des gaz, respectivement au niveau des extrémités inférieure et supérieure du carter (38); des moyens (70, 72) pour introduire un écoulement d'eau d'alimentation dans la chaudière; des moyens (80, 102) pour réaliser un écoulement des gaz d'échappement provenant du moteur à turbine à gaz (22) par l'intermédiaire de la chaudière (26) pour convertir l'eau d'alimentation en vapeur; et une turbine à vapeur (28) reliée à la chaudière de manière à recevoir un écoulement de vapeur produit dans la chaudière pour entraîner la turbine; la chaudière (26) comportant des moyens (46, 50, 54), (48, 52, 56) de production de vapeur à haute et à basse pressions, indépendants du point de vue hydraulique et reliés respectivement à des sections à haute et à basse pressions de la turbine à vapeur, caractérisée en ce que la chaudière (26) comporte une pluralité de circuits indépendants (44) de production de vapeur, comprenant chacun un seul tube sinueux à basse pression comportant des éléments de tube horizontaux et un tube à haute pression (46) impliqué dans le tube à basse pression (48).

2. Centrale de production d'énergie selon la revendication 1, qui comporte une pompe unique (70) pour amener l'eau d'alimentation à la fois aux moyens (46, 50, 54) de production de vapeur à haute pression et aux moyens (48, 52, 56) de production de vapeur à basse pression de la chaudière (26).

3. Centrale de production d'énergie selon la revendication 1 ou 2, qui comporte des moyens formant condenseur (62) pour condenser la vapeur sortant de la turbine à vapeur (28), et un collecteur d'eau chaude (64) pour recevoir le condensat, le collecteur d'eau chaude (64) contenant la réserve d'eau d'alimentation de la centrale de production d'énergie (20).

4. Centrale de production d'énergie selon l'une quelconque des revendications précédentes, dans laquelle tous les composants de la chaudière (26) susceptibles d'être contactés par un fluide aqueux, sont réalisés en des matériaux résistants à la corrosion.

5. Centrale de production d'énergie selon l'une quelconque des revendications précédentes, qui comporte des collecteurs de sortie (114, 116) pour recevoir la vapeur produite dans les tubes à haute et à basse pressions (46, 48), les collecteurs de sortie (114, 116) étant renfermés dans le carter (38) de la chaudière, ce qui a pour effet que la vapeur produite dans la chaudière (26) et sortant en raison d'une fuite ou d'une rupture est évacuée de façon sûre hors du carter.

6. Centrale de production d'énergie. selon la revendication 5, qui comporte des premier et second collecteurs d'admission (110, 112) avec lesquels communiquent respectivement les entrées (50, 52) des tubes à haute et à basse pressions (46, 48), et des moyens formant orifices (74) en relation de circuit fluidique entre la pompe (70) et les collecteurs (110, 112) de manière à répartir entre eux l'écoulement de l'eau d'alimentation.

7. Centrale de production d'énergie selon l'une quelconque des revendications précédentes, dans laquelle il est prévu des moyens formant orifices (122) au niveau de l'extrémité d'entrée (52, 50) des tube à haute et à basse pressions (46, 48) dans la chaudière (26) pour créer, au niveau de leur entrée, une chute de pression suffisamment supérieure à la chute de pression dans le reste du tube (46, 48) pour réduire l'instabilité d'écoulement dans le tube.

8. Centrale de production d'énergie selon l'une quelconque des revendications précédentes, dans laquelle les tubes à haute et à basse pressions (46, 48) sont équipés d'ailettes extérieures hélicoïdales et pleines (78).

FIG.1

# FIG. 2

FIG.3

FIG.6

FIG.4a

FIG.4b

FIG.5a    FIG.5b